(19) Europäisches Patentamt
European Patent Office
Office européen des brevets

(11) Publication number: **0 025 840**
**B1**

(12) **EUROPEAN PATENT SPECIFICATION**

(45) Date of publication of patent specification: **13.02.85**

(51) Int. Cl.$^4$: **C 08 L 7/00,** C 08 L 9/00, C 08 K 5/54, C 08 J 5/04, B 60 C 1/00, B 29 D 30/06

(21) Application number: **80104472.8**

(22) Date of filing: **29.07.80**

# (54) A cured rubber skin stock and its use.

(30) Priority: **06.08.79 US 64326**

(43) Date of publication of application:
**01.04.81 Bulletin 81/13**

(45) Publication of the grant of the patent:
**13.02.85 Bulletin 85/07**

(84) Designated Contracting States:
**AT BE DE FR GB IT LU SE**

(56) References cited:
**DE-A-2 165 198**
**GB-A-1 372 912**
**GB-A-1 499 721**
**US-A-4 052 524**

**The file contains technical information submitted after the application was filed and not included in this specification**

(73) Proprietor: **THE FIRESTONE TIRE & RUBBER COMPANY**
**1200 Firestone Parkway**
**Akron, Ohio 44317 (US)**

(72) Inventor: **Schonfeld, Steven E.**
**702 N. Revere Road**
**Akron Ohio 44313 (US)**
Inventor: **Ravagnani, Frederick J.**
**4606 Sherylton Hills Drive**
**Uniontown Ohio 44685 (US)**
Inventor: **Hergenrother, William L.**
**195 Dorchester Road**
**Akron Ohio 44313 (US)**

(74) Representative: **Kraus, Walter, Dr. et al**
**Patentanwälte Kraus & Weisert Irmgardstrasse 15**
**D-8000 München 71 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 025 840 B1

**Description**

The present invention is directed to novel, cured rubber skim stock compositions and their use for the production of tires. The rubber skim stock compositions exhibit substantial rubber-to-metal adhesive properties when an appropriate amount of at least one of certain trimethoxy silane compounds is incorporated therein.

The useful life of reinforced elastomeric products can be extended by effecting an increased affinity between the reinforcing member and the elastomeric material. Such increased affinity also enhances the structural integrity of the product by providing a unitized laminate composed of the reinforcing member and the contiguous elastomeric material.

Reinforced elastomeric products such as hose, pneumatic tires, conveyor belts and power transmission drive belts have conventionally been made with either textile or metallic cord as the reinforcing material. For certain purposes, including the manufacture of radial ply tires, metallic cord, such as bright steel wire, is a preferred reinforcing material.

It has been customary to attempt to increase the adhesion between metal, or steel, structural elements and elastomeric material, including rubber, by various methods.

US—A—3,088,847 describes a method of improving the adherence of polymeric material, including natural and synthetic resins, to metals by the use of an aminoalkyl silicon compound as an undercoating. A thin film of an aminoalkyl silicon compound is applied to a metal substrate, and is then overcoated with the desired polymeric material.

US—A—4,052,524 describes a process for improving the hydrolytic stability of the adhesive bond between a steel reinforcing element and a metal-to-rubber organic adhesive. A steel element, such as steel tire cord, is cleaned and then coated with an organosilane primer compound, prior to being coated with an adhesive latex. The adhesive latex coating is cured, and the coated steel reinforcing element is then embedded in a curable rubber composition.

US—A—4,059,473 is directed to organosilane primer compositions which form an adhesive bond between substrates, including metals, and an overlaying silicone rubber composition.

The application of a primer coating, with or without an additional adhesive coating, to the reinforcing element prior to contacting the reinforcing element with the elastomeric material, involves additional, time-consuming and expensive processing steps. The necessity of relying on such a primer coating for imparting sufficient rubber to metal adhesion also introduces new parameters for error, such as the possibility that insufficient cleaning of the reinforcing element or other conditions would prevent a sufficient amount of primer from being deposited onto the element. The irregular application of such a primer coat, as well as the overapplication of the material may foreseeably have a deleterious effect upon the desired adhesion.

Vulcanizable rubber stocks containing mercaptopropyl trimethoxysilane are described in GB—A—1,372,912 and DE—A—2,165,198. GB—A—1,499,721 describes the incorporation of various sulphur-containing alkoxysilanes into the rubber stock in order to improve the adhesion of the stock to metal. However, none of these references deals with the special problems arising when the cured rubber skim stock contains bright steel wire as metal member.

The object of the present invention is to provide rubber skim stock compositions being bonded to bright steel wire having enhanced rubber to steel adhesive properties through the incorporation of specific additives in specific amounts into conventional rubber skim stock.

The adhesion strength should be retained under conditions such as elevated temperature, increased humidity and stress, encountered in the normal use of vehicular tires, conveyor and power transmission belts, and the like.

This object is accomplished by the present invention by a cured rubber skim stock, said stock being bonded to at least one bright steel wire as metal member contained within said stock which is characterized by containing 3-(2-amino-ethylamino)-propyl trimethoxysilane or 3-mercaptopropyl trimethoxysilane in an amount from 0.5 to 2.0 parts by weight per 100 parts of elastomer in said rubber skim stock, the trimethoxysilane compound having been incorporated into said stock prior to curing.

The cured rubber skim stocks of the present invention comprise a conventional rubber skim stock to which is added, prior to contacting the rubber with its reinforcement and vulcanizing the rubber stock-reinforcement structure, an adhesion-promoting additive. The additive is 3-(2-amino-ethylamino)-propyl trimethoxysilane or 3-mercaptopropyl trimethoxysilane in an amount from 0.5 to 2.0 parts by weight per 100 parts of elastomer.

The additives are compounded directly into the rubber skim stock composition without the necessity of either modification or pre-reaction with other components of the article to be produced. The additive-containing rubber skim stock composition may then be contacted with its reinforcing elements, or metallic reinforcing filaments, without pretreatment of the reinforcing filaments other than a conventional cleaning procedure. The rubber stock-reinforcement structure may then be utilized in the manufacture of the desired article according to conventional techniques. Improved rubber-to-metal adhesion has been reported herein for bright steel, that in, clean or unplated steel.

According to the present invention, the rubber component of the cured rubber skim stock composition may be comprised of any one or a combination of natural or synthetic elastomeric materials, such as

natural rubber, polybutadiene, polyisoprene, styrene-butadiene copolymer, butyl rubber, ethylenepropylene rubber and the like. Conventional compounding and vulcanizing ingredients such as carbon black, antioxidants, sulfur, zinc oxide, accelerators, softeners and processing oils are incorporated in the skim stock to produce a composition suitable for use in a rubber stock-reinforcement structure. Typical properties for such a rubber composition include a hardness value of over approximately 55 Shore A, 300% modulus value of at least approximately 68.75 bar (1000 psi) and elongation at break of approximately 250%. The foregoing may vary without affecting the applicability of the present invention to its purpose of increasing adhesion between rubber compositions and metallic reinforcing filaments by the addition to those compositions of the novel combination of ingredients disclosed herein.

To illustrate our invention we have presented a typical rubber stock hereinbelow which is suitable for preparation of rubber articles such as tires. It is to be understood that the composition of the rubber stock provided is not part of the present invention and that it has been presented solely to enable those skilled in the art to have representative rubber skim stocks with which to practice the invention.

A suitable rubber skim stock can be compounded according to the components set forth in Formulations A and B. Amounts employed are given in parts per hundred parts rubber by weight.

Formulation A

| Masterbatch Ingredients | |
|---|---|
| Natural Rubber | 75 |
| Polybutadiene | 25 |
| FEF Carbon Black | 40 |
| Silica Filler | 10 |
| Zinc Oxide | 4 |
| Stearic Acid | 1 |
| Hydrocarbon Resin | 5 |
| Manobond C 16 | 3.5 |
| Resorcinol | 2.5 |
| Antioxidant | 1 |
| **Final Mix Ingredients** | |
| Sulfur | 4.8 |
| Oil | 1.2 |
| Accelerator | 0.35 |
| Vulcanizer | 4 |

The adhesion promoting additive ingredients utilized in the practice of the present invention are specific trimethoxy silane compounds, namely 3-(2-aminoethylamino) propyl trimethoxysilane, $H_2NCH_2CH_2NH(CH_2)_3\ Si(OCH_3)_3$, and 3-mercaptopropyl trimethoxysilane, $HS(CH_2)_3\ Si(OCH_3)_3$.

Example 1

The Masterbatch ingredients of the conventional rubber skim stock material of Formulation A were compounded in a 1.1 liter Banbury mixer. The mix times were about seven minutes, and a final Banbury temperature of about 162°C was achieved. The resulting masterbatch was final milled at a temperature below 104°C together with the final mix ingredients of Formulation A until dispersion was achieved at a mill speed of approximately 50 rpm and at a temperature of from 71° to 82°C.

The silica filler employed in the masterbatch is commercially available from PPG Industries, Inc. under the trademark Hi—Sil 233, Hi—Sil being a registered trademark of PPG Co. Chemical Division. The hydrocarbon resin was in flake form, had a softening point between 100° to 110°C, an iodine number of from 125 to 167, and an ash content of 0.05%. Suitable commercially available hydrocarbon resins include those marketed under the trademark Betaprene 105 by Reichhold Chemicals, Inc., and the trademark Picco 14215 by Hercules, Inc. The antioxidant was N-(1,3-dimethylbutyl)-N'-phenyl-p-phenylenediamine commercially available from Monsanto Company under the trademark Santoflex 13, Santoflex being a registered trademark of Monsanto Company.

Manobond C is a trade name for a commercially available source of a cobalt and boron containing additive that is compatible in our formulation; it is believed to have the structure:

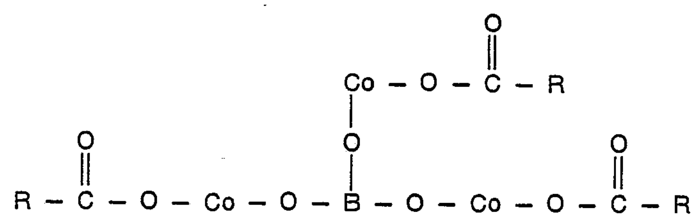

wherein each R is an alkyl radical of from 9 to 12 carbons. Manobond C is available as a blue, viscous liquid; it contains 15.5 to 16.5% cobalt (Manobond C 16) or it contains 17.5 to 18.5% cobalt (Manobond C 18); it has an intrinsic viscosity (at 25°C) of 3,000 to 9,000 mPa·s (3,000 to 9,000 cps.). The ash content is from 22 to 25 weight percent. manobond C is commercially available from Wyrough and Loser, Inc.

Among the final mix ingredients, the accelerator used was N-t-butyl-2-benzothiazole sulfenamide, and the vulcanizer was a commercially available melamine resin marketed by American Cyanamid Co. under the trademark Cyrez 963.

Examples 2—5

For Examples 2—5, the control rubber skim stock composition of Formulation A was again prepared as in Example 1. In Examples 2 and 3, however, among the final mix ingredients there was included the adhesion promoting additive of the present invention, 3-(2-aminoethylamino) propyl trimethoxysilane, in minor proportion as set forth in Table I. In Examples 4 and 5, among the final mix ingredients there was included the adhesion promoting additive of the present invention, 3-mercaptopropyl trimethoxysilane, also in the proportions set forth in Table I.

The rubber stock samples of Examples 1 through 5 were then prepared for testing according to the detailed T-Adhesion Test Procedure set forth hereinbelow. The results of the T-Adhesion Test are also included in Table I wherein the adhesion between the rubber skim stock and bright steel wire is reported for Examples 1 through 5. Adhesion measurements are presented for equilibrated unconditioned test pads and humidity chamber aged test pads.

TABLE I

| | Example 1 | Example 2 | Example 3 | Example 4 | Example 5 |
|---|---|---|---|---|---|
| Additive to Rubber Skim Stock | | | | | |
| 3-(2-aminoethylamino)propyl trimethoxysilane (phr) | – | 0.5 | 2.0 | – | – |
| 3-mercaptopropyl trimethoxy-silane (phr) | – | – | – | 0.5 | 2.0 |
| T-Adhesion to Bright Steel Wire at 110°C (Kg. /cm.) | | | | | |
| Unconditioned test pads (Tested after equilibration) | 5.72 | 13.75 | 10.89 | 16.43 | 14.65 |
| Test pads aged 1 hour at 149°C in steam | 5.72 | 12.32 | 11.61 | 13.75 | 17.50 |

The test utilized T-adhesion pads prepared by placing 60 gauge slabs of uncured skim stock on 50 gauge fiber reinforced backing. Sample width was 1.2 cm. Clean bright steel wires (unplated) were placed between two pads of the reinforced skim stock with the wires in contact with the uncured skim at 1.2 cm intervals. The pads were placed in a mold and were cured for 30 minutes at 149°C. Testing was done on an Instron Universal Tester at 25.4 cm per minute and 110°C.

Detailed T-Adhesion Test Procedure

1. Using a Clicker machine and a 16.5 cm die, prepare an adequate number of calendered and control stock samples for pad building.
2. Use one piece of calendered fabric backing (1.27 cm).
3. Ply one piece of control rubber stock 1.52 cm) onto the fabric backing.
4. Place sample in building jig with fabric side down.
5. Place ten cords (of bright steel wire) approximately 17.8 cm in length equally spaced on top of the two piece assembly.
6. Invert another 2 ply assembly, made as in items 1, 2 and 3, on top of cords so that cords are between 2 layers of stock to be tested.
7. This assembly should now fit snugly into the mold.
8. Adhesion pads shall be cured for 30 minutes at 149°C and then allowed to equilibrate for 24 hours.
9. Testing Machine: 1130 Instron Universal Tester.
10. Test speed 25.4 cm/minute; temperature 110°C after 20 minutes preheating.
11. The top grip shall be of a special holder made for the cured sample, with a slot in the bottom to permit the sample to be inserted with the wire protruding. The bottom grip shall be a wedge type, designed to exert increasing tightening as the wire is pulled.
12. Record 10 pulls and average. Multiply by 0.1786 to obtain kilograms per centimeter.

The test serves as a quantitative comparison of the adhesion strengths of the various rubber composition samples, and a quantitative indication of the comparative length of product life a structure prepared with such a sample would have. The test is accelerated, consisting of severe stress conditions greater than those normally encountered by the products represented by the test structure, even under the most rigorous use. While it has not been determined at what point in the test conditions the maximum wear or maximum useful life of a product prepared with a sample composition would be reached, the test does serve to compare sample capability to withstand stress.

The adhesion of rubber skim stock to metallic reinforcing filaments, particularly bright steel wire (unplated) is increased when the compounds of the present invention, namely 3-(2-aminoethylamino)propyl trimethoxysilane and 3-mercaptopropyl trimethoxysilane, are added to the rubber skim stock during compounding, as can be seen by a comparison of the results reported for Examples 1—5 in Table I.

It is to be noted that in each sample in which an additive according to the present invention was incorporated into a rubber skim stock composition, the rubber-to-metal adhesive strength of that rubber composition was demonstrated as being nearly two to nearly three times the adhesive strength of the rubber composition, without additive. This was shown to be true whether the T-Adhesion Test pads were subjected to the test procedure after rubber stock cure and equilibration, or were additionally subjected to aging in a humidity chamber under conditions of high temperature and humidity (149°C and steam), conditions normally deleterious to both rubber stock compositions and rubber-to-metal adhesion.

The additives of the present invention can be utilized in yet other rubber skim stock compositions with the result that the adhesion of the rubber skim stock to its untreated metallic reinforcing filaments is increased. A second rubber skim stock composition, tested with regard to the effect of the additives of the present invention on the adhesive properties of the rubber skim stock for bright steel wire, is set forth in Formulation B. Again, proportions are in parts per hundred parts rubber.

Formulation B

| | |
|---|---|
| **Masterbatch Ingredients** | |
| Natural Rubber | 100 |
| HAF Carbon Black | 50 |
| Zinc Oxide | 7.5 |
| Stearic Acid | 0.5 |
| Antioxidant/Antiozonant | 3 |
| Resorcinol | 2 |
| **Final Mix Ingredients** | |
| Sulfur | 2.8 |
| Oil | 0.7 |
| Pre-Vulcanization Inhibitor | 0.3 |
| Accelerator | 0.9 |
| Resin | 2.2 |

Example 6

The Masterbatch ingredients of the rubber skim stock material of Formulation B were compounded in a 1.1 liter Banbury mixer. The mix times were about seven minutes and a final Banbury temperature of about 162°C was achieved. The resulting masterbatch was final milled at a temperature below 104°C together with the final mix ingredients of Formulation B until dispersion was achieved, as in Example 1.

The antioxidant/antiozonant utilized in the masterbatch was a 2:1 combination of 6-dodecyl-1,2-dehydro-2,2,4-trimethyl quinoline and N-(1,3-dimethylbutyl)-N'-phenyl-p-phenylenediamine, commercially available from Monsanto Company under the trademarks Santoflex DD and Santoflex 13, respectively, Santoflex being a registered trademark of Monsanto Company.

Among the final mix ingredients of Formulation B, a suitable pre-vulcanization inhibitor can be N-(cyclohexylthio) phthalimide, marketed under the trademark Santogard PVI by Monsanto Company. A suitable accelerator is N-oxydiethylene benzothiazole-2-sulfenamide, available under the trademark NOBS Special from American cyanamid Co. The resin used was an addition product of hexamethylenetetraamine and resorcinol, available from U.S. Pipe and Foundry under the tradename Resotropin resin.

Examples 7—10

For Examples 7—10, the control rubber skim stock composition of Formulation B was again prepared as in Example 6. In Examples 7 and 8, however, among the final mix ingredients there was included the adhesion promoting additive of the present invention, 3-(2-aminoethylamino) propyl trimethoxysilane in minor proportion as set forth in Table II. In Examples 9 and 10, among the final mix ingredients there was

included the adhesion promoting additive of the present invention, 3-mercaptopropyl trimethoxysilane also in the proportions set forth in Table II.

The rubber stock samples of Examples 6 through 10 were then prepared for testing with bright steel wire according to the T-Adhesion Test Procedure set out hereinabove. The results of the T-Adhesion Test are included in Table II.

The rubber-to-metal adhesive strength of rubber skim stock to metallic reinforcing filaments, particularly bright steel wire (unplated) is increased when the compounds of the present invention, namely 3-(2-aminoethylamino)propyl trimethoxysilane and 3-mercaptopropyl trimethoxysilane, are added to the rubber skim stock during compounding, as can be seen by a comparison of the test results reported for Examples 6—10 in Table II.

TABLE II

| | Example 6 | Example 7 | Example 8 | Example 9 | Example 10 |
|---|---|---|---|---|---|
| Additive to Rubber Skim Stock | | | | | |
| 3-(2-aminoethylamino)propyl trimethoxysilane (phr) | — | 0.5 | 2.0 | — | — |
| 3-mercaptopropyl trimethoxysilane (phr) | — | — | — | 0.5 | 2.0 |
| T-Adhesion to Bright Steel Wire at 110°C | | | | | |
| Unconditioned test pads (Tested after equilibration) | 2.50 | 6.25 | 6.43 | 7.14 | 8.39 |
| Test pads aged 1 hour at 149°C in steam | 5.18 | 10.72 | 10.54 | 10.54 | 12.32 |

It will again be noted that for each sample in which an additive according to the present invention was incorporated into a rubber skim stock composition, the rubber-to-metal adhesive strength of that rubber composition was demonstrated as being two to nearly three times the adhesive strength of the rubber composition without additive. Again, this was shown with equilibrated unconditioned test pads and humidity chamber aged test pads.

In both sets of Examples, utilizing Formulations A and B, the metal reinforcing filaments were untreated before incorporation into the test pads, except for routine cleaning operations. Bright steel wire (unplated) was used for the reinforcing filament, such that there would be no additional factors introduced with regard to affinity between the plating and the rubber skim stock compoositions tested.

In each test, the additives of the present invention, having been compounded into the rubber stock composition to become part of the polymeric mass upon cure, imparted an increase in rubber-to-metal adhesive strength to approximately two to three times the strength of the rubber stock without the additive.

Consequently, the need, as expressed by the prior art, for pre-treating the metallic reinforcement for curable elastomeric or rubber stock compositions has been overcome. The time and expense in such pretreatment can be avoided. The metallic reinforcement can be adhesively bonded to rubber stock with enhanced effectiveness, merely by being contacted prior to cure, with the rubber stock composition of the article to be produced, in which rubber stock composition, at least one additive of the present invention has been incorporated.

In this manner, the polymeric mass contacting the metallic reinforcement contains the additive which incorporated into the mass, provides the enhanced rubber-to-metal bonding. Thus, there is no need to bond a material to the metal first, and then to the rubber stock to provide rubber-to-metal adhesion.

Such a polymeric mass, or rubber skim stock composition, containing the additives of the present invention, may be incorporated together with metallic reinforcing filaments such as bright steel wire (unplated) into useful articles such as pneumatic tires, hoses, conveyor and power transmission belts, motor mounts, golf club grips, or any article in which elastomeric compositions are to be bonded to metal,

such as unplated bright steel surfaces. Such compositions may be cured by conventional means, such as by vulcanization, as a step in the production of the desired article.

As stated hereinabove, the wire coated in the practice of our invention is bright steel.

The wire can be in the form of a strand, mat, web, ply or braid.

The present invention also finds utility in, for example, steel-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

## Claims

1. A cured rubber skim stock, said stock being bonded to at least one bright steel wire as metal member contained within said stock characterized by containing 3-(2-amino-ethylamino)-propyl trimethoxysilane or 3-mercaptopropyl trimethoxysilane in an amount from 0.5 to 2.0 parts by weight per 100 parts of elastomer in said rubber skim stock, the trimethoxysilane compound having been incorporated into said stock prior to curing.

2. A cured rubber skim stock as set forth in claim 1, wherein said curing has been achieved by vulcanization.

3. Use of the cured rubber skim stock of claims 1 or 2 for the production of tires having improved adhesion between the cured rubber skim stock and bright steel reinforcing filaments embedded therein.

## Patentansprüche

1. Vulkanisiertes Skim-Kautschuk-Material, wobei das Material an mindestens einen in dem Material enthaltenen Blankstahldraht als Metallelement gebunden ist, dadurch gekennzeichnet, daß es 3-(2-Aminoethylamino)-propyltrimethoxysilan oder 3-mercaptopropyltrimethoxysilan in einer Menge von 0,5 bis 2,0 Gewichtsteilen pro 100 Gewichtsteile Elastomeres in dem Skim-Kautschuk-Material enthält, wobei die Trimethoxysilanverbindung in das Material vor dem Härten eingearbeitet worden ist.

2. Vulkanisiertes Skim-Kautschuk-Material nach Anspruch 1, dadurch gekennzeichnet, daß das Härten durch Vulkanisieren bewirkt worden ist.

3. Verwendung des vulkanisierten Skim-Kautschuk-Materials der Ansprüche 1 oder 2 zur Herstellung von Reifen mit verbesserter Haftung zwischen dem vulkanisierten Skim-Kautschuk-Material und darin eingebetteten Blankstahl-Verstärkungsfäden.

## Revendications

1. Caoutchouc de skim réticulé, lié à au moins un fil d'acier poli en tant que corps métallique contenu dans ledit caoutchouc, caractérisé en ce qu'il renferme du 3-(2-amino-éthylamino)-propyltriméthoxysilane ou du 3-mercaptopropyltriméthoxysilane en une quantité de 0,5 à 2,0 parties en poids pour 100 parties d'élastomère dans ledit caoutchouc de skim, le triméthoxysilane ayant été incorporé au caoutchouc avant la réticulation.

2. Caoutchouc de skim réticulé suivant la revendication 1, dans lequel ladite réticulation a été effectuée par vulcanisation.

3. Utilisation du caoutchouc de skim réticulé suivant la revendication 1 ou 2 pour la production de bandages pneumatiques présentant une très bonne adhérence entre le skim de caoutchouc réticulé et les filaments de renforcement en acier poli qui y sont incorporés.